# EUROPEAN PATENT SPECIFICATION

(11) **EP 1 671 393 B1**
(45) Date of publication and mention of the grant of the patent: **03.04.2013**
(21) Application number: 04774658.1
(22) Date of filing: 20.09.2004
(51) Int. Cl.: H01M 10/0569, H01M 10/0567, H01M 10/0566, H01M 10/0525

(54) **NONAQUEOUS LITHIUM SECONDARY BATTERY WITH CYCLABILITY AND/OR HIGH TEMPERATURE SAFETY IMPROVED**
WASSERFREIE LITHIUM-SEKUNDÄRBATTERIE MIT VERBESSERTER ZYKLIERBARKEIT UND/ODER HOCHTEMPERATURSICHERHEIT
BATTERIE SECONDAIRE AU LITHIUM A ELECTROLYTE NON AQUEUX DOTEE DE CARACTERISTIQUES AMELIOREES DE DUREE DE CYCLE ET/OU DE SECURITE A HAUTE TEMPERATURE

(30) Priority: 19.09.2003 KR 2003065169
(43) Date of publication of application: 21.06.2006
(73) Proprietor: LG Chem, Ltd., Seoul 150-721 (KR)
(72) Inventor: RYU, Duk-Hyun, Daejeon 302-162 (KR); LEE, Jae-Hyun, 109-1805, Cheonggu narae Apartment, Daejeon 305-729 (KR); JEONG, Jun-Yong, 107-408, Hanbat Garden Apartment, Daejeon 301-211 (KR); YEON, Jin-Hee, 7-107, LG Chemical Apartment, Daejeon 305-340 (KR); JANG, Min-Chul, 305-1503, Songgang Green Apartment, Daejeon 305-751 (KR); KOO, Chang-Wan, Daejeon 305-345 (KR); SHIN, Sun-Sik, 128-1101, Hanbit Apartment, Daejeon 305-755 (KR); KU, Cha-Hun, 110-406, Samsung Hanwool Apartment, Daejeon 305-707 (KR); LEE, Han-Ho, 103-204, Hyundai Apartment, Daejeon 305-340 (KR)
(74) Representative: Cabinet Plasseraud
(86) International application number: PCT/KR2004/002399
(87) International publication number: WO 2005/029632

(56) References cited:
- JP-A- 11 066 949
- JP-A- 63 168 973
- US-A- 5 561 005
- US-A1- 2002 192 565
- US-B1- 6 413 678

## Description

### Technical Field

The present invention relates to a lithium secondary battery with improvements in charge/discharge and cycle life characteristics at ambient and high temperatures, and/or storage characteristics and safety at high temperature, as well as a nonaqueous electrolyte for use therein.

### Background Art

With the recent advancement of electronic technology, portable information devices, such as mobile phones, PDA and laptop computers, are widely used. In such portable information devices, there are strong demands for smaller size, lighter weight, and continuous long-term driving. As a driving power source for such portable information devices, batteries are used. Thus, studies to develop batteries, particularly lithium secondary batteries using nonaqueous electrolytes, which have light weight while showing high voltage, high capacity, high power, high energy density and long cycle life, are being actively conducted.

Generally, lithium secondary batteries utilize lithium-containing transition metal oxide as a positive active material. Examples of the positive active material include LiCoO₂, LiNiO₂, LiMn₂O₄, LiMnO₂, LiNi_{1-X}Co_{X}M_{Y}O₂ (M = Al, Ti, Mg or Zr; 0 < X ≤ 1; 0 ≤ Y ≤ 0.2) LiNi_{X}Co_{Y}Mn_{1-X-Y}O₂ (0 < X ≤ 0.5; 0 < Y ≤ 0.5), and a mixture of two or more thereof. Furthermore, the lithium secondary batteries utilize carbon, lithium metal or alloy as a negative active material. Also, metal oxides, such as TiO₂ and SnO₂, which can store and release lithium ions and have a potential of less than 2V for lithium, may be used as the negative active material.

When such lithium secondary batteries are stored at high temperature or exposed to high temperature, gas will be generated within the batteries by the side reaction of electrodes with the electrolyte oxides, resulting in deterioration in storage life characteristics and safety at high temperature, as well as deterioration in battery performance.

Meanwhile, regarding an improvement in the cycle life of the lithium secondary batteries, Japanese Patent Laid-open Publication No. 1996-138735 describes that if LiPF₆ was used as an electrolyte, an effect on the improvement of cycle life by the addition of metal halides would not be obtained.

US 6 413 678 and JP 63 168973 relate to non aqueous electrolyte comprising halogen.

### Disclosure of the Invention

It is an object of the present invention to provide a lithium secondary battery which has improvements in charge/discharge efficiencies and cycle life characteristics even when it operates at ambient or high temperature.

Another object of the present invention is to provide a lithium secondary battery with high-temperature safety, in which the generation of gas by the side reaction of electrolyte oxides with electrodes is inhibited even when the battery is stored at high temperature or exposed to high temperature.

The present inventors have found that the use of metal halide in a non-aqueous electrolyte has little or no effect on the improvement of battery cycle life and shows a reduction in battery cycle life, whereas the use of halogen, such as iodine, chlorine or bromine, in the nonaqueous electrolyte, has an effect on the improvement of battery cycle life and shows improvements in storage characteristics and safety at high temperature, unlike the case of the metal halide.

Moreover, the present inventors have found that the addition of both a pyrrole or its derivative and halogen to the nonaqueous electrolyte has a synergistic effect on the improvement of battery cycle life.

The present invention has been made based on these findings.

The present invention provides:
(i) a nonaqueous electrolyte for batteries according to claim 1; and
(ii) a lithium secondary battery which is characterized by including the nonaqueous electrolyte (i).

The addition of halogen, such as iodine, chlorine or bromine, into the nonaqueous electrolyte, results in an improvement in the cycle life of the lithium secondary battery.

Meanwhile, although an SEI insulator film having no electron conductivity is formed on the negative electrode surface of the lithium secondary battery, the addition of pyrrole or its derivative to the nonaqueous electrolyte leads to the formation of polypyrrole, an electron-conducting polymer, thus lowering resistance.

Furthermore, by a synergistic effect with halogen, the pyrrole or its derivative in the nonaqueous electrolyte provides an improvement in charge/discharge cycle characteristics and an outstanding improvement in battery cycle life.

Moreover, if halogen is used as an electrolyte additive as described above, the high-temperature safety of the battery will be secured. The reason thereof is as follows.

If the battery is stored at high temperature or exposed to high temperature, the solvent in the nonaqueous electrolyte will be partially oxidized to cause a side reaction with the positive and negative electrodes of the battery, thus generating gas. This will cause not only deterioration in the battery performance but also deterioration in the battery swelling leading to deterioration in the battery safety.

Halogen, such as iodine, chlorine or bromine, which is used as the electrolyte additive, is a material having strong adsorption property. Thus, the halogen is adsorbed on the electrodes upon initial charge, so that when the battery is stored at high temperature or exposed to high temperature, the halogen inhibits the side reaction between the oxide of the electrolyte and the positive and negative electrodes, thus inhibiting the generation of gas. For this reason, a swelling phenomenon at high temperature occurs less seriously. Thus, the use of the halogen can provide a battery having excellent storage characteristics and safety at high temperature.

Particularly, the use of iodine as the electrolyte additive has the greatest effect on the inhibition of gas generation.

The halogen is added to the nonaqueous electrolyte at an amount ranging from 0.005% by weight to 1% by weight. If the halogen is used at amounts out of this content range, it will have a reduced effect on the improvement of battery cycle life. The content of the halogen in the nonaqueous electrolyte is preferably in a range of 0.01-0.5% by weight. At a content of less than 0.01% by weight, the halogen will have an insignificant effect on the inhibition of gas generation, and at a content of more than 0.5% by weight, it will cause deterioration in the battery performance.

The pyrrole or its derivative is preferably added to the nonaqueous electrolyte at the amount of 0.01-0.5% by weight. At less than 0.01% by weight, the thickness of a film formed from the pyrrole or its derivative will be insufficient, and at more than 0.5% by weight, the charge characteristic of the battery will be poor.

Examples of the halogen include, but are not limited to, iodine, chlorine and bromine.

According to the invention, the pyrrole derivative is selected from the group consisting of 2,5-dimethylpyrrole, 2,4-dimethylpyrrole, 2-acetyl N-methylpyrrole, 2-acetylpyrrole, and N-methylpyrrole.

The inventive lithium secondary battery includes the inventive nonaqueous electrolyte. Examples of the lithium secondary batteries include lithium-metal secondary batteries, lithium-ion secondary batteries, lithium polymer secondary batteries, and lithium-ion polymer secondary batteries.

The inventive lithium secondary battery includes:
a) a positive electrode capable of storing and releasing lithium ions;
b) a negative electrode capable of storing and releasing lithium ions;
c) a porous separator; and
d) a nonaqueous electrolyte containing:
   i) a lithium salt; and
   ii) a liquid electrolyte compound.

The inventive nonaqueous electrolyte preferably contains cyclic carbonate and/or linear carbonate. Examples of the cyclic carbonate include, are not limited to, ethylene carbonate (EC), propylene carbonate (PC) and gamma-butyrolactone (GBL). Examples of the linear carbonate include, but are not limited to, diethyl carbonate (DEC), dimethyl carbonate (DMC), ethylmethyl carbonate (EMC), and methylpropyl carbonate (MPC).

The inventive nonaqueous electrolyte contains lithium salts which are preferably selected from the group consisting of LiClO₄, LiCF₃SO₃, LiPF₆, LiBF₄, LiAsF₆, and LiN (CF₃SO₂)₂.

In the present invention, lithium-containing transition metal oxide is used as a positive active material. Examples of the positive active material include, but are not limited to, LiCoO₂, LiNiO₂, LiMn₂O₄, LiMnO₂, LiNi_{1-X}Co_{X}M_{Y}O₂ (M = Al, Ti, Mg or Zr; 0 < X ≤ 1; 0 ≤ Y ≤ 0.2), LiNi_{X}Co_{Y}Mn_{1-X-Y}O₂ (0 < X ≤ 0.5; 0<Y≤0.5), and a mixture of two or more thereof. Also, metal oxides, such as MnO₂, or a mixture of two or more thereof may be used as the positive active material.

As a negative active material, carbon, lithium metal or alloy may be used.

Also, in the inventive lithium secondary battery, separator may be a porous separator, such as a porous polyolefin separator.

According to a conventional method, the inventive lithium secondary battery can be fabricated by placing the porous separator between the positive electrode and the negative electrode and introducing a nonaqueous electrolyte containing the lithium salt, such as LiPF6, and additives.

The inventive lithium secondary battery may be used in a pouch, cylindrical or angular shape.

### Advantageous Effect

According to the present invention, the cycle life of the lithium secondary battery can be improved by adding the halogen to the nonaqueous electrolyte of the lithium secondary battery, and a synergistic effect on the improvement of the battery cycle life can be expected by adding pyrrole or its derivative together with the halogen to the nonaqueous electrolyte. This effect on the improvement of the battery cycle life suggests an improvement in the charge/discharge cycle characteristics of the battery.

In addition, according to the present invention, the halogen, such as iodine, chlorine or bromine, is added to the nonaqueous electrolyte of the lithium secondary battery. When the lithium secondary battery is stored at high temperature or exposed to high temperature, the added halogen is adhered to the electrode surface so as to inhibit the side reaction between the oxides formed by the oxidation of the electrolyte at high temperature and the positive and negative electrodes, thus inhibiting the generation of gas. Thus, the present invention can provide the battery having excellent storage characteristics and safety at high temperature.

### Brief Description of the Drawings

FIG. 1 is a graphic diagram showing the comparison of discharge capacity ratio at a range of initial cycle to 400 cycles between batteries fabricated according to Comparative Examples 1 to 3 and Example 1.
FIG. 2 is a graphic diagram showing the comparison of discharge capacity ratio at a range of initial cycle to 400 cycles between batteries fabricated according to Comparative Examples 4 and 5 and Examples 2 and 3.
FIG. 3 is a graphic diagram showing a change in thickness at a high-temperature storage state for 383562-size lithium polymer batteries fabricated according to Examples 4 and 5 and Comparative Examples 6 and 7.

### Best Mode for Carrying Out the Invention

Hereinafter, the present invention will be described in detail by examples. It is to be understood, however, that these examples are given for illustrative purpose only and not intended to limit the scope of the present invention.

### Comparative Example 1

LiCo≤₂ as a positive active material, a carbon material as a negative active material, and 1M LiPF₆ solution with a composition of EC: DEC = 1 : 1, as an electrolyte, were used. To the electrolyte, 0.1% by weight of aluminum iodide was added, and the resulting electrolyte was introduced into a 700-mAh lithium-ion polymer battery, thus fabricating a battery. The fabricated lithium-ion polymer battery was subjected to a cycle life test in which the battery was charged to 4.2 V at a current of 700 mA in a constant current/constant voltage mode, cut-off upon the reduction of current to 50 mA, discharged at a current of 700 mA in a constant current mode, and cut-off at 3 V.

### Comparative Example 2

A lithium-ion polymer battery was fabricated in the same manner as in Comparative Example 1 except that the aluminum iodide was added to the electrolyte at the amount of 0.5% by weight. A cycle life test on the fabricated battery was performed in the same manner as in Comparative Example 1.

### Comparative Example 3

A lithium-ion polymer battery was fabricated in the same manner as in Comparative Example 1 except that tin iodide in place of the aluminum iodide was added to the electrolyte at the amount of 0.1% by weight. A cycle life test on the fabricated battery was performed in the same manner as in Comparative Example 1.

### Example 1 (not according to the claims)

A lithium-ion polymer battery was fabricated in the same manner as in Comparative Example 1 except that iodine in place of the aluminum iodide was added to the electrolyte at the amount of 0.05% by weight. A cycle life test on the fabricated battery was performed in the same manner as in Comparative Example 1.

### Test result 1

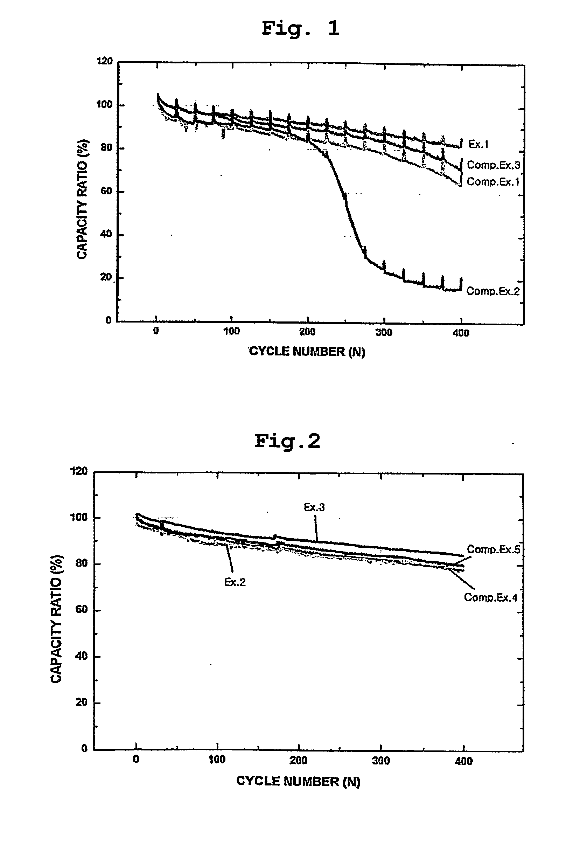

FIG. 1 is a graphic diagram showing the comparison of discharge capacity ratio at a range of initial cycle to 400 cycles between batteries fabricated according to Comparative Examples 1 to 3 and Example 1. As shown in FIG. 1, it could be found that an increase in the amount of addition of the aluminum iodide resulted in a reduction in the battery cycle life (Comparative Examples 1 and 2), and also the addition of the tin iodide resulted in a reduction in the battery cycle life (Comparative Example 3). However, it could be confirmed that the battery of Example 1 where the iodine had been used at an amount determined in view of the weight ratio of iodine to metal iodide in Comparative Example 1, 3 showed an improvement in the battery cycle life over the case of use of the metal halides

### Comparative Example 4

LiCoO₂ as a positive active material, a carbon material as a negative active material, and 1M LiPF₆ solution with a composition of EC: DEC = 1 : 1, as an electrolyte, were used. The electrolyte was introduced into an 800-mAh lithium-ion polymer battery, thus fabricating a battery. The fabricated lithium-ion polymer battery was subjected to a cycle life test in which the battery was charged to 4.2 V at a current of 800 mA in a constant current/constant voltage mode, cut-off upon the reduction of current to 50 mA, discharged at a current of 800 mA in a constant current mode, and cut-off at 3 V.

### Comparative Example 5

A lithium-ion polymer battery was fabricated in the same manner as in Comparative Example 4 except that 2,5-dimethylpyrrole was added to the electrolyte at the amount of 0.2% by weight. A cycle life test on the fabricated battery was performed in the same manner as in Comparative Example 4.

### Example 2 (not according to the claims)

A lithium-ion polymer battery was fabricated in the same manner as in Comparative Example 4 except that iodine was added to the electrolyte at the amount of 0.05% by weight. A cycle life test on the fabricated battery was performed in the same manner as in Comparative Example 4.

### Example 3

A lithium-ion polymer battery was fabricated in the same manner as in Comparative Example 4 except that 2,5-dimethylpyrrole and iodine were added to the electrolyte at the amounts of 0.2% by weight and 0.05% by weight, respectively. A cycle life test on the fabricated battery was performed in the same manner as in Comparative Example 4.

### Test result 2

FIG. 2 is a graphic diagram showing the comparison of discharge capacity ratio at a range of initial cycle to 400 cycles between batteries fabricated according to Comparative Examples 4 and 5 and Examples 2 and 3. As shown in FIG. 2, it could be found that, although the single addition of 2,5-dimethylpyrrole or iodine could have an effect on the improvement of discharge capacity ratio (Comparative Example 4 and Example 2), the addition of iodine in combination with 2,5-dimethylpyrrole provided a further improvement in discharge capacity ratio (Example 3).

### Example 4 (not according to the claims)

LiCoO₂ as a positive active material, a carbon material as a negative active material, and 1M LiPF₆ solution with a composition of EC: DEC =1 : 1, as an electrolyte, were used. Iodine was added to the electrolyte at the amount of 0.05 wt%, and the resulting electrolyte was introduced into an 800-mAh 383562-size lithium-ion polymer battery, thus fabricating a battery.

### Example 5 (not according to the claims)

A lithium-ion polymer battery was fabricated in the same manner as in Example 4 except that the iodine as the electrolyte additive was added at the amount of 0.2 wt%.

### Comparative Example 6

A lithium-ion polymer battery was fabricated in the same manner as in Example 4 except that the iodine as the electrolyte additive was not added.

### Comparative Example 7

A lithium-ion polymer battery was fabricated in the same manner as in Example 4 except that aluminum iodide in place of the iodine was added at the amount of 0.5 wt%.

### High-temperature storage test

The 800-mAh 383562-size lithium ion polymer batteries fabricated in Examples 4 and 5 and Comparative Examples 6 and 7 were fully charged to 4.2 V at a current of 500 mA in a constant current/constant voltage mode, and cut-off when the current was reduced to 50mA.

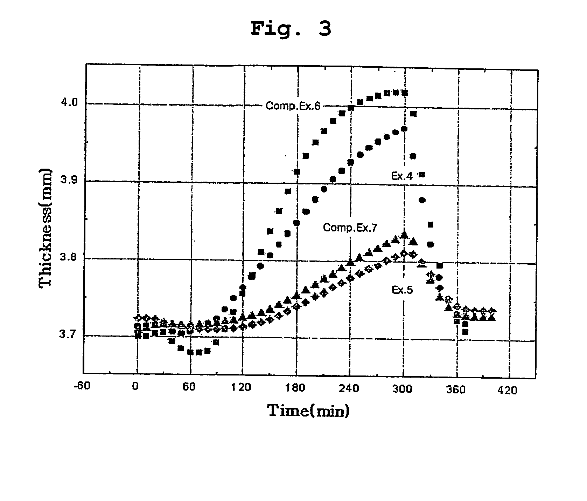

The resulting lithium ion polymer batteries were placed in an oven and subjected to a high-temperature storage test which comprises the following three steps: elevating the oven temperature from ambient temperature to 90 °C for 1 hour, storing the batteries at 90 °C for 4 hours, and lowering the oven temperature to ambient temperature for 1 hour. During the high-temperature storage test, a change in the thickness of the batteries was observed. The results are shown in Table 1 below and FIG. 3.

**Table 1**

| | Before high-temperature storage test | After high temperature storage test | Recovery rate |
|---|---|---|---|
| Comparative Example 6 | 805 mAh | 684 mAh | 85.0% |
| Example 4 | 806 mAh | 783 mAh | 97.1% |
| Example 5 | 808 mAh | 791 mAh | 97.9% |
| Comparative Example 7 | 806 mAh | 787 mAh | 97.6% |

Table 1 shows the battery capacities at 0.2C rate before and after the high-temperature storage test. As evident from Table 1, the capacity recovery rates before and after the high-temperature storage test were higher in Examples 4 and 5 and Comparative Example 7 than those in Comparative Example 6.

Furthermore, FIG. 3 shows a change in the thickness of the lithium-ion polymer batteries during the high-temperature storage test. As shown in FIG. 3, an increase in the thickness of the batteries fabricated in Examples 4 and 5 and Comparative Example 7 was lower than that of Comparative Example 6, and the increase in the battery thickness was lower in Example 5 and Comparative Example 7 than that in Example 4. As described above, this is because the iodine was adsorbed on the positive or negative electrode so as to inhibit the side reaction between an electrolyte oxide formed at high temperature and the positive or negative electrode, thus inhibiting the generation of gas. Also, an increase in the amount of addition of the iodine showed an increase in the effect of the iodine. It is thought that the case of the aluminum iodide showed an improvement by an increase in the addition amount thereof.

## Claims

1. A nonaqueous electrolyte for batteries, wherein the nonaqueous electrolyte further comprises pyrrole or pyrrole derivative and halogen; wherein the pyrrole derivative is selected from the group consisting of 2,5-dimethylpyrrole, 2,4-dimethylpyrrole, 2-acetyl N-methylpyrrole, 2-acetylpyrrole, N-methylpyrrole, and a mixture of two or more thereof.

2. The nonaqueous electrolyte of Claim 1, wherein the content of the halogen is 0.005-1% by weight.

3. The nonaqueous electrolyte of Claim 1, wherein the content of the pyrrole or pyrrole derivative is 0.01-0.5% by weight.

4. The nonaqueous electrolyte of Claim 1, wherein the halogen is selected from the group consisting of iodine, chlorine, bromine and a mixture of two or more thereof.

5. The nonaqueous electrolyte of Claim 1, which comprises a lithium salt selected from the group consisting of LiClO₄, LiCF₃SO₃, LiPF₆, LiBF₄, LiAsF₆, and LiN (CF₃SO₂)₂, a mixture of two or more thereof.

6. The nonaqueous electrolyte of Claim 1, wherein the electrolyte contains: a cyclic carbonate selected from the group consisting of ethylene carbonate (EC), propylene carbonate (PC), gamma-butyrolactone (GBL) and a mixture of two or more thereof; or a linear carbonate selected from the group consisting of diethyl carbonate (DEC), dimethyl carbonate (DMC), ethylmethyl carbonate (EMC), methylpropyl carbonate (MPC) and a mixture of two or more thereof; or both the cyclic carbonate and the linear carbonate.

7. A lithium secondary battery, comprising:
a) a positive electrode capable of storing and releasing lithium ions;
b) a negative electrode capable of storing and releasing lithium ions;
c) a porous separator; and
d) a nonaqueous electrolyte containing
i) a lithium salt; and
ii) a liquid electrolyte compound,
wherein the electrolyte is the nonaqueous electrolyte as claimed in any one of Claims 1 to 6.

8. The lithium secondary battery of Claim 7, wherein the positive active material a) is a lithium transition metal oxide selected from the group consisting of LiCoO₂, LiNiO₂, LiMn₂O₄, LiNi_{1-X}Co_{X}O₂ (0 < X < 1), and a mixture of two or more thereof.

9. The lithium secondary battery of Claim 7, wherein the negative active material b) is carbon, lithium metal or alloy.

## Patentansprüche

1. Ein nichtwässriger Elektrolyt für Batterien, wobei der nichtwässrige Elektrolyt ferner Pyrrol oder ein Pyrrolderivat und Halogen umfasst; wobei das Pyrrolderivat ausgewählt ist aus der Gruppe bestehend aus 2,5-Dimethylpyrrol, 2,4-Dimethylpyrrol, 2-Acetyl-N-methylpyrrol, 2-Acetylpyrrol, N-Methylpyrrol und einem Gemisch von zwei oder mehreren davon.

2. Der nichtwässrige Elektrolyt nach Anspruch 1, wobei der Gehalt des Halogens 0,005 - 1 Gew.% beträgt.

3. Der nichtwässrige Elektrolyt nach Anspruch 1, wobei der Gehalt des Pyrrols oder des Pyrrolderivats 0,01 - 0,5 Gew.% beträgt.

4. Der nichtwässrige Elektrolyt nach Anspruch 1, wobei das Halogen ausgewählt ist aus der Gruppe bestehend aus Jod, Chlor, Brom und einem Gemisch von zwei oder mehreren davon.

5. Der nichtwässrige Elektrolyt nach Anspruch 1, der ein Lithiumsalz umfasst, ausgewählt aus der Gruppe bestehend aus LiClO₄, LiCF₃SO₃, LiPF₆, LiBF₄, LiAsF₆ und LiN(CF₃SO₂)₂, einem Gemisch von zwei oder mehreren davon.

6. Der nichtwässrige Elektrolyt nach Anspruch 1, wobei der Elektrolyt enthält: ein cyclisches Carbonat, ausgewählt aus der Gruppe bestehend aus Ethylencarbonat (EC), Propylencarbonat (PC), gamma-Butyrolacton (GBL) und einem Gemisch von zwei oder mehreren davon; oder ein lineares Carbonat, ausgewählt aus der Gruppe bestehend aus Diethylcarbonat (DEC), Dimethylcarbonat (DMC), Ethylmethylcarbonat (EMC), Methylpropylcarbonat (MPC) und einem Gemisch von zwei oder mehreren davon; oder sowohl das cyclische Carbonat als auch das lineare Carbonat.

7. Ein Lithiumakkumulator, umfassend:
a) eine positive Elektrode, die zur Speicherung und Freisetzung von Lithium-Ionen imstande ist;
b) eine negative Elektrode, die zur Speicherung und Freisetzung von Lithium-Ionen imstande ist;
c) einen porösen Separator; und
d) einen nichtwässrigen Elektrolyten, enthaltend
i) ein Lithiumsalz; und
ii) eine flüssige Elektrolyt-Verbindung,
wobei der Elektrolyt der wie in einem der Ansprüche 1 bis 6 beanspruchte nichtwässrige Elektrolyt ist.

8. Der Lithiumakkumulator nach Anspruch 7, worin das positive aktive Material a) ein Lithium-Übergangsmetalloxid ist, ausgewählt aus der Gruppe bestehend aus LiCoO₂, LiNiO₂, LiMn₂O₄, LiNi_{1-X}Co_{X}O₂ (0 < X < 1) und einem Gemisch von zwei oder mehreren davon.

9. Der Lithiumakkumulator nach Anspruch 7, wobei das negative aktive Material b) Kohlenstoff, Lithiummetall oder eine Legierung ist.

## Revendications

1. Electrolyte non aqueux pour des batteries, dans lequel l'électrolyte non aqueux comprend en outre un pyrrole ou un dérivé de pyrrole et un halogène ; dans lequel le dérivé de pyrrole est choisi dans le groupe constitué de 2,5-diméthylpyrrole, de 2,4-diméthylpyrrole, de 2-acétyl N-méthylpyrrole, de 2-acétylpyrrole, de N-méthylpyrrole, et d'un mélange de deux d'entre eux ou plus.

2. Electrolyte non aqueux selon la revendication 1, dans lequel la teneur en halogène est de 0,005 à 1 % en poids.

3. Electrolyte non aqueux selon la revendication 1, dans lequel la teneur en pyrrole ou dérivé de pyrrole est de 0,01 à 0,5 % en poids.

4. Electrolyte non aqueux selon la revendication 1, dans lequel l'halogène est choisi dans le groupe constitué d'iode, de chlore, de brome et d'un mélange de deux d'entre eux ou plus.

5. Electrolyte non aqueux selon la revendication 1, qui comprend un sel de lithium choisi dans le groupe constitué de LiClO₄, LiCF₃SO₃, LiPF₆, LiBF₄, LiAsF₆ et LiN(CF₃SO₂)₂, d'un mélange de deux d'entre eux ou plus.

6. Electrolyte non aqueux selon la revendication 1, dans lequel l'électrolyte contient : un carbonate cyclique choisi dans le groupe constitué de carbonate d'éthylène (EC), de carbonate de propylène (PC), de gamma-butyrolactone (GBL) et d'un mélange de deux d'entre eux ou plus ; ou d'un carbonate linéaire choisi dans le groupe constitué de diéthylcarbonate (DEC), de diméthylcarbonate (DMC), d'éthylméthylcarbonate (EMC), de méthylpropylcarbonate (MPC) et d'un mélange de deux d'entre eux ou plus ; ou d'à la fois le carbonate cyclique et le carbonate linéaire.

7. Batterie secondaire au lithium, comprenant :
a) une électrode positive capable de stocker et de libérer des ions lithium ;
b) une électrode négative capable de stocker et de libérer des ions lithium ;
c) un séparateur poreux ; et
d) un électrolyte non aqueux contenant
i) un sel de lithium ; et
ii) un composé d'électrolyte liquide,
dans lequel l'électrolyte est l'électrolyte non aqueux selon l'une quelconque des revendications 1 à 6.

8. Batterie secondaire au lithium selon la revendication 7, dans laquelle la matière active positive a) est un oxyde de métaux de transition de lithium choisi dans le groupe constitué de LiCoO₂, LiNiO₂, LiMn₂O₄, LiNi_{1-X}Co_{X}O₂ (0 < x < 1) et d'un mélange de deux d'entre eux ou plus.

9. Batterie secondaire au lithium selon la revendication 7, dans laquelle la matière active négative b) est le carbone, le métal de lithium ou un alliage de lithium.
